# EUROPEAN PATENT APPLICATION

(11) **EP 1 972 403 A2**
(43) Date of publication of application: **24.09.2008**
(21) Application number: 08153011.5
(22) Date of filing: 19.03.2008
(51) Int. Cl.: B23H 3/04, B23H 9/10

(54) **Methods and systems for forming turbulated cooling holes**

(30) Priority: 22.03.2007 US 726424
(71) Applicant: GENERAL ELECTRIC COMPANY, Schenectady, NY 12345 (US)
(72) Inventor: LEE, Ching-Pang, Cincinnati, OH 45243 (US); WEI, Bin, Mechanicville, NY 12118 (US); CHOU, Chen-Yu Jack, Cincinnati, OH 45241 (US)
(74) Representative: Illingworth-Law, William Illingworth

(57) **Abstract**

An electrochemical machining (ECM) apparatus is provided. The electrochemical machining (ECM) apparatus includes an electrode (100) including at least one uninsulated section (110), and insulation that substantially circumscribes at least one section of the electrode, wherein the electrode is inserted into a starter hole to form a hole defined by at least one first section (140) having a first cross-sectional area and at least one second section (142) having a second cross-sectional area (130).

## Description

### BACKGROUND OF THE INVENTION

This invention relates generally to electrochemical machining (ECM), and more specifically, to methods and systems for forming cooling holes in a turbine engine airfoil.

At least some known turbine engine components include cooling holes formed therein. Generally, such cooling holes allow cooling air in the engine to flow through the engine component to provide convective cooling. Accordingly, such cooling holes may increase a life span of the turbine engine and/or reduce costs associated with the maintenance of the turbine engine.

Electrochemical machining and/or shaped tube electrochemical machining (STEM) is commonly used to form cooling holes in turbine engine components. During an ECM process, a workpiece being machined is coupled to a positive terminal of a DC power supply and the electrode is coupled to a negative terminal of the DC power supply. An electrolyte fluid flows between the electrode and the workpiece. For example, the electrolyte fluid may be an acid or an aqueous salt solution. During the machining process, the workpiece is dissolved by controlled electrochemical reactions to form the cooling hole. Generally, such machining processes form cooling holes that have substantially circular cross-sectional area and a length-to-diameter ratio that is larger than five. Moreover, these holes are generally uniform and have a substantially uniform roughness. However, such cooling holes often provide an insufficient amount of convective cooling because they lack a sufficient amount of roughness or discontinuities that may increase convective cooling with the component.

### BRIEF DESCRIPTION OF THE INVENTION

In one embodiment, a method for forming holes in an object is provided. The method includes forming a starter hole in the object, providing an electrochemical machining electrode having at least one insulated section that substantially circumscribes the electrode and at least one uninsulated section, and inserting the electrode into the starter hole to facilitate forming a hole defined by at least one first section having a first cross-sectional area and at least one second section having a second cross-sectional area.

In another embodiment, an electrochemical machining (ECM) apparatus is provided. The apparatus includes an electrode including at least one uninsulated section and insulation that substantially circumscribes at least one section of the electrode. The electrode is inserted into a starter hole to form a hole defined by at least one first section having a first cross-sectional area and at least one second section having a second cross-sectional area.

In yet another embodiment, a system for machining holes in a turbine engine component is provided. The system includes an electrochemical machining (ECM) apparatus that includes an electrode including at least one uninsulated section and insulation that substantially circumscribes at least one section of the electrode. The electrode is inserted into a starter hole to form a hole defined by at least one first section having a first cross-sectional area and at least one second section having a second cross-sectional area.

### BRIEF DESCRIPTION OF THE DRAWINGS

Embodiments of the present invention will now be described, by way of example only, with reference to the accompanying drawings, in which:

Figure 1 is a cross-sectional view of an exemplary electrochemical machining (ECM) electrode being inserted into a starter hole in a turbine engine airfoil;

Figure 2 is a cross-sectional view of the electrode shown in Figure 1 and inserted in the airfoil shown in Figure 1; and

Figure 3 is an enlarged cross-sectional view of the airfoil shown in Figure 1 including a cooling hole formed therethrough.

### DETAILED DESCRIPTION OF THE INVENTION

The present invention provides a system that may be used to machine thin trailing edge cooling holes in a turbine engine airfoil. The system uses a hollow electrochemical machining (ECM) electrode that has electrolyte fluid flowing therethrough. For example, the electrolyte fluid may be an acid or an aqueous salt solution. Prior to machining, the airfoil is coupled to a positive terminal of a DC power supply and the electrode is coupled to a negative terminal of the DC power supply. As the electrolyte flows between the electrode and the airfoil, the airfoil is dissolved by controlled electrochemical reactions to form the cooling hole.

During machining, electrolyte fluid flows through the hollow electrode to facilitate discharging a current that removes material from the airfoil. In the exemplary embodiment, the electrode forms a cooling hole that includes at least one first section defined by a first cross-sectional area and at least one second section defined by a second cross-sectional area. Further, in the exemplary embodiment, each first section of the cooling hole is oriented between adjacent second sections of the cooling hole.

Although, the present invention is described in terms of forming a cooling hole in a turbine airfoil, as will be appreciated by one skilled in the art, the present invention may also be applicable to forming cooling holes in other components of an engine and/or components of any other system that may require cooling holes, for example, but not limited to, a turbine casing, exhaust pipes, and ducts. Further, although the present invention is described in terms of electrochemical machining, as will be appreciated by one skilled in the art, the present invention may also be applicable to other methods of forming cooling holes.

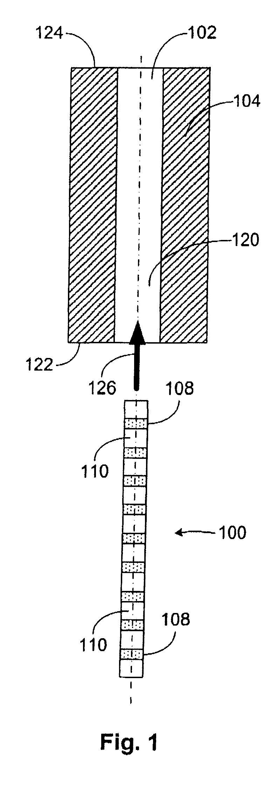

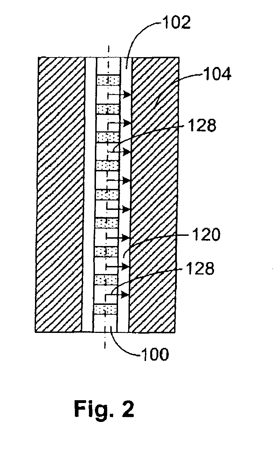

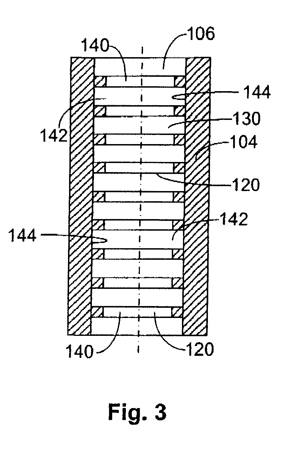

Figure 1 illustrates a cross-sectional view of an exemplary electrochemical machining (ECM) electrode 100 being inserted through a starter hole 102 formed in a turbine engine airfoil 104. Figure 2 illustrates electrode 100 after having been inserted into starter hole 102. Figure 3 illustrates a cross-sectional view of airfoil 104 after a machining process is complete, and a cooling hole 106 has been formed therein. In the exemplary embodiment, electrode 100 is substantially cylindrical and hollow and is configured to carry electrolyte fluid therethrough. As is known in the art, the electrolyte fluid serves as a medium for electrochemical dissolution to remove material from the part being machined. The electrolyte fluid also removes dissolved material from machining zones. As will be appreciated by one skilled in the art, electrode 100 may have any suitable shape based on the intended function thereof and/or an intended result of operating electrode 100.

Further, in the exemplary embodiment, electrode 100 includes a plurality of insulated sections 108 formed by insulation that substantially circumscribes electrode 100. As described in detail below, insulated sections 108 facilitate confining material dissolution to desired areas so that a desired cooling hole size and shape can be obtained. As will be appreciated by one skilled in the art, electrode 100 may include any suitable number of insulated sections 108 that enable electrode 100 to function as described herein. In the exemplary embodiment, electrode 100 also includes a plurality of uninsulated sections 110. As will be appreciated by one skilled in the art, electrode 100 may include any number of insulated sections 110 that enable electrode 100 to function as described herein. In the exemplary embodiment, an uninsulated section 110 is oriented between each adjacent insulated section 108. In an alternative embodiment, the configuration of uninsulated sections 110 and insulated sections 108 is variably selected based on the intended function of electrode 100, and/or an intended result of operating electrode 100.

During the machining process, and specifically, prior to the operation of electrode 100, starter hole 102 is formed in airfoil 104. In the exemplary embodiment, starter hole 102 is drilled using at least one of an electrochemical machining electrode, an electrical discharge machining electrode, and/or a laser. Further, in the exemplary embodiment, starter hole 102 is formed in the airfoil trialing edge. Moreover, in the exemplary embodiment, starter hole 102 is formed with a first cross-sectional area 120 that is substantially constant through starter hole 102. For example, in the exemplary embodiment, cross-sectional area 120 is substantially circular. As will be appreciated by one skilled in the art, in an alternative embodiment, first cross-sectional area 120 may be formed with any shape that facilitates forming turbulated cooling hole 106. Further, in the exemplary embodiment, starter hole 102 may be formed at various angles including, but not limited to approximately 0°, approximately 90°, or any oblique angle between 0° and 90° measured with respect to a first surface 122 of airfoil 104.

During the machining process, and specifically, during the operation of electrode 100, electrode 100 is inserted into starter hole 102 through first surface 122 of airfoil 104 and is directed towards an opposite second surface 124 of airfoil 104, as shown in Figure 1 with arrow 126. During operation, electrolyte fluid is channeled through electrode 100 to direct a current 128 induced to electrode 100. In the exemplary embodiment, current 128 is discharged from the plurality of uninsulated sections 110 to facilitate removing material from portions of starter hole 102 to form cooling hole 106. In the exemplary embodiment, the material is removed from starter hole 102 through electrochemical dissolution. In the exemplary embodiment, current 128 discharged from electrode uninsulated sections 110 causes material to be removed from starter hole 102 to form a plurality of second cross-sectional areas 130 that are larger than first cross-sectional area 120. For example, in the exemplary embodiment, second cross-sectional area 130 is substantially circular. As will be appreciated by one skilled in the art, in an alternative embodiment, cross-sectional area 130 may have any shape suitable for forming turbulated cooling hole 106.

During the machining process, current 128 is not discharged from insulated sections 108 of electrode 100. Accordingly, portions of starter hole 102 are not exposed to current 128 during the machining process. As such, a turbulated cooling hole 106 is formed that has a plurality of first sections 140 that have not been exposed to current 128 and a plurality of second sections 142 that have been exposed to current 128 discharged from uninsulated sections 110 of electrode 100. In the exemplary embodiment, each first section 140 is formed with a first cross-sectional area 120 and each second section 142 is formed with a second cross-sectional area 130. Further in the exemplary embodiment, each cooling hole first section 140 extends between a pair of adjacent cooling hole second sections 142.

Accordingly, electrode 100 facilitates forming a turbulated cooling hole 106 that has different cross-sectional areas 120 and 130 therethrough. Specifically, when fully formed, cooling hole 106 has different cross-sectional areas 120 and 130 defined in respective cooling hole sections 140 and 142. In the exemplary embodiment, cross-sectional areas 120 and 130 may be formed with at least one of a smooth, rough, and/or a corrugated surface finish.

As such, electrode 100 facilitates providing discontinuous and/or rough surfaces within cooling hole 106. Accordingly, a flow of cooling air through cooling hole 106 is disrupted. As a result, the cooling air is facilitated to have an increased turbulence and a greater amount of contact with an inner surface 144 of cooling hole 106. Accordingly, an amount of convective cooling within cooling hole 106 is facilitated to be increased. Moreover, turbulated cooling hole 106 facilitates improving film cooling downstream from cooling hole 106.

In one embodiment, a method for forming turbulated cooling holes in an object is provided. The method includes forming a starter hole in the object. The method also includes providing an electrochemical machining electrode that has at least one insulated section that substantially circumscribes the electrode and at least one uninsulated section. During formation of the cooling hole, the electrode is inserted into the starter hole to facilitate forming a turbulated cooling hole that includes at least one first section defined by a first cross-sectional area and at least one second section defined by a second cross-sectional area. In one embodiment, the method includes forming a plurality of cooling hole first sections that have a first cross-sectional area and a plurality of cooling hole second sections that have a second cross-sectional area, such that each cooling hole first section extends between a pair of adjacent cooling hole second sections.

In another embodiment, the method includes providing an electrochemical machining electrode that has a plurality of insulated sections that substantially circumscribe the electrode, wherein an uninsulated section of the electrode is oriented between each pair of adjacent insulated sections of the electrode. In a further embodiment, the method includes forming each second section of the cooling hole with a current discharged from an uninsulated section of the electrode. In one embodiment, the method includes forming the second section of the cooling hole with a diameter that is larger than a diameter of the first section of the cooling hole. In another embodiment, the method also includes circulating electrolyte fluid through the electrode to facilitate the removal of material from the starter hole. In the exemplary embodiment, the method includes forming the cooling hole in a turbine engine airfoil.

The above-described systems and methods enable an electrode to form a turbulated cooling hole in a turbine engine component. The cooling hole formed disrupts a flow of cooling air through the cooling hole to facilitate increasing a turbulence of the cooling air and increasing an amount of contact that the cooling air has with the inner surfaces of the cooling hole. As such, an amount of convective cooling within the cooling hole is facilitated to be increased. Moreover, the turbulated cooling hole facilitates improving film cooling downstream from the cooling hole. As such, the above-described systems and methods facilitate increasing a life-span of the turbine engine and/or decreases costs associated with maintenance of the turbine engine.

As used herein, an element or step recited in the singular and proceeded with the word "a" or "an" should be understood as not excluding plural said elements or steps, unless such exclusion is explicitly recited. Furthermore, references to "one embodiment" of the present invention are not intended to be interpreted as excluding the existence of additional embodiments that also incorporate the recited features.

Exemplary embodiments of systems and methods for forming turbulated cooling holes in an airfoil are described above in detail. The systems and methods illustrated are not limited to the specific embodiments described herein, but rather, components of the system may be utilized independently and separately from other components described herein. Further, steps described in the method may be utilized independently and separately from other steps described herein.

While the invention has been described in terms of various specific embodiments, those skilled in the art will recognize that the invention can be practiced with modification within the spirit and scope of the claims.

## Claims

1. An electrochemical machining (ECM) apparatus comprising:
an electrode (100) comprising at least one uninsulated section (110); and
insulation that substantially circumscribes at least one section of said electrode, wherein said electrode is inserted into a starter hole to form a hole defined by at least one first section (140) having a first cross-sectional area and at least one second section (142) having a second cross-sectional area (130).

2. An ECM electrode (100) in accordance with Claim 1, wherein said electrode further comprises a plurality of insulated sections (108) that substantially circumscribe the electrode, wherein an uninsulated section (110) of the electrode extends between each pair of adjacent insulated sections of the electrode.

3. An ECM electrode (100) in accordance with Claim 1 or Claim 2, wherein said electrode forms a hole (106) having a plurality of first sections (140) and a plurality of second sections (142), wherein each first section is defined between a pair of adjacent second sections.

4. An ECM electrode (100) in accordance with any one of the preceding Claims, wherein said electrode forms each second section (142) of the hole (106) with current discharged from an uninsulated section (110) of the electrode.

5. An ECM electrode (100) in accordance with any one of the preceding Claims, wherein said electrode forms the second section (142) of the hole (106) with a cross-sectional area (130) that is larger than a cross-sectional area (120) of the first section (140) of the hole (102).

6. An ECM electrode (100) in accordance with any one of the preceding Claims, wherein said electrode circulates electrolyte fluid therethrough to facilitate removing material from the starter hole (102).

7. An ECM electrode (100) in accordance with any one of the preceding Claims, wherein said electrode is configured to form a cooling hole (106) in a turbine engine component.

8. A system for machining holes in a turbine engine component, said system comprising an electrochemical machining (ECM) apparatus comprising:
an electrode (100)comprising at least one uninsulated section (110); and
insulation that substantially circumscribes at least one section of said electrode, wherein said electrode is inserted into a starter hole (102) to form a hole defined by at least one first section (140) having a first cross-sectional area (120) and at least one second section (142) having a second cross-sectional area (130).

9. A system in accordance with Claim 8, wherein said electrode (100) further comprises a plurality of insulated sections (108) that substantially circumscribe the electrode, wherein an uninsulated section (110) of the electrode extends between each pair of adjacent insulated sections of the electrode.

10. A system in accordance with Claim 8 or Claim 9, wherein said electrode (100) forms a hole (106) having a plurality of first sections (140) and a plurality of second sections (142), wherein each first section is defined between a pair of adjacent second sections.
